# FASCICULE DE BREVET EUROPEEN

(11) **EP 3 509 932 B1**
(45) Date de publication et mention de la délivrance du brevet: **12.08.2020**
(21) Numéro de dépôt: 17768188.9
(22) Date de dépôt: 04.09.2017
(51) Int. Cl.: B62D 25/08, B62D 25/20, B62D 43/10

(54) **PLANCHER D'UN VÉHICULE AUTOMOBILE POURVU D'UN BAC DE ROUE DE SECOURS ET D'UN ÉLÉMENT DE RENFORT**
KRAFTFAHRZEUGBODENWANNE MIT EINER RESERVERADMULDE UND EINEM VERSTÄRKUNGSELEMENT
MOTOR VEHICLE FLOORPAN PROVIDED WITH A SPARE WHEEL WELL AND A REINFORCING ELEMENT

(30) Priorité: 09.09.2016 FR 1658386
(43) Date de publication de la demande: 17.07.2019
(73) Titulaire: RENAULT s.a.s., 92100 Boulogne-Billancourt (FR)
(72) Inventeur: BELAIDOUNI, Reda, 78320 Le Mesnil Saint Denis (FR); LACOURT, Philippe, 91390 Morsang Sur Orge (FR)
(86) Numéro de dépôt international: PCT/FR2017/052329
(87) Numéro de publication internationale: WO 2018/046825

(56) Documents cités:
- DE-A1- 10 210 304
- US-A- 5 860 687
- US-A1- 2002 185 881
- US-A1- 2011 227 367

## Description

La présente invention concerne un plancher d'un véhicule automobile pourvu d'un bac de roue de secours et d'un élément de renfort ainsi qu'à un procédé de montage de cet élément de renfort sur ce plancher.

Un tel plancher est connu du document DE 102 10 304 A1 qui prévoit un élément de rigidification intérieur au bac en forme d'étoile à trois branches.

L'invention concerne également le véhicule automobile comportant un tel plancher.

Lorsqu'un véhicule se déplace sur une chaussée, son conducteur et ses passagers sont placés dans l'habitacle dans une ambiance très bruyante. Et c'est un souci constant des constructeurs automobiles que de limiter le plus possible le niveau sonore de leurs véhicules.

Les origines de ces bruits dans l'habitacle sont très variées. On peut citer les bruits dus au moteur, ou d'origine aérodynamique, ou liés aux pompes hydrauliques diverses ou encore aux bruits résultants d'une zone de soubassement d'un plancher notamment d'un plancher arrière du véhicule en plastique. Ces derniers ont pour origine les chocs subis en roulage qui provoquent des déformations du plancher arrière notamment au niveau d'un bac de roue de secours compris dans le plancher arrière engendrant ainsi des vibrations d'où résultent des bruits appelés « tambourinement ». Pour pallier cet inconvénient, on connaît dans l'état de la technique des solutions qui prévoient de définir des nervures de renforcement dans les zones du plancher arrière où de telles vibrations peuvent se produire. Toutefois de telles solutions ne permettent pas de contrer efficacement les déformations que peuvent subir le plancher et donc d'empêcher la génération de telles vibrations.

La présente invention vise à pallier ces inconvénients liés à l'état de la technique.

Dans ce dessein, l'invention concerne un plancher d'un véhicule automobile notamment un plancher arrière, pourvu d'un bac de roue de secours et d'un élément de renfort, le plancher comportant une zone de fixation comprenant un fond du bac de roue de secours dans laquelle est agencé ledit élément de renfort en étant relié mécaniquement à ladite zone de fixation notamment à des parties centrale et périphériques définies dans ladite zone de fixation, l'élément de renfort comprenant :
- un bord de maintien défini sur un premier côté de l'élément de renfort, ledit bord étant courbé sur tout ou partie de la longueur dudit élément de renfort ;
- un deuxième bord de maintien défini sur un deuxième côté de l'élément de renfort, ledit bord étant courbé sur tout ou partie de la longueur d'une région centrale de l'élément de renfort, et
- des premier et deuxième côtés opposés l'un à l'autre.

Dans d'autres modes de réalisation :
- la zone de fixation est définie sur une face extérieure ou une face intérieure du plancher ;
- l'élément de renfort comprend :
   - des régions centrale et périphériques pourvues d'ouvertures reliant des faces externe et interne de l'élément de renfort ;
   - des ouvertures susceptibles d'être traversées chacune par un élément de fixation ;
   - des éléments de fixation reliant mécaniquement ledit élément de renfort aux parties centrale et périphériques de ladite zone de fixation ;
- une face externe d'une région centrale de l'élément de renfort comprend une cavité dans laquelle est agencé un élément de fixation ;
- l'élément de renfort a une section longitudinale présentant une forme d'un quadrilatère notamment celle d'un rectangle ;
- une région centrale de l'élément de renfort a une section transversale présentant une forme en « U » ;
- la zone de fixation comprend :
   - des reliefs de renforcement ;
   - une partie centrale pourvue d'une cavité définie dans ladite zone de fixation ;
   - des parties centrale et périphériques de ladite zone de fixation comprennent des ouvertures aptes à coopérer avec des éléments de fixation.

L'invention concerne également un procédé de montage d'un élément de renfort sur un plancher d'un véhicule automobile comprenant une étape d'agencement de l'élément de renfort dans une zone de fixation du plancher et une étape réalisation d'une liaison mécanique entre l'élément de renfort et la zone de fixation.

L'invention concerne aussi un véhicule automobile comprenant un tel plancher.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une vue schématique d'une face interne d'un élément de renfort susceptible d'être agencé au niveau d'une zone de fixation d'un plancher d'un véhicule automobile comprenant un fond du bac de roue de secours selon le mode de réalisation de l'invention ;
- la figure 2 représente en perspective une vue de la face interne de l'élément de renfort comprenant des éléments de fixation selon le mode de réalisation de l'invention ;
- la figure 3 représente en perspective une vue de la face externe de l'élément de renfort comprenant des éléments de fixation selon le mode de réalisation de l'invention ;
- la figure 4 représente en perspective une vue de la face externe de l'élément de renfort dépourvu des éléments de fixation selon le mode de réalisation de l'invention ;
- la figure 5 représente en perspective une vue de la face interne de l'élément de renfort dépourvu des éléments de fixation selon le mode de réalisation de l'invention ;
- la figure 6 représente en perspective une vue de profil de l'élément de renfort comprenant les éléments de fixation selon le mode de réalisation de l'invention ;
- la figure 7 représente en perspective une vue du plancher du véhicule automobile comprenant l'élément de renfort agencé sur la zone de fixation comprenant le fond du bac de roue de secours définie sur une face extérieure du plancher selon le mode de réalisation de l'invention, et
- la figure 8 représente un logigramme d'un procédé de montage de l'élément de renfort sur le plancher.

Dans la description qui va suivre, des chiffres de référence identiques désignent des pièces identiques ou ayant des fonctions similaires.

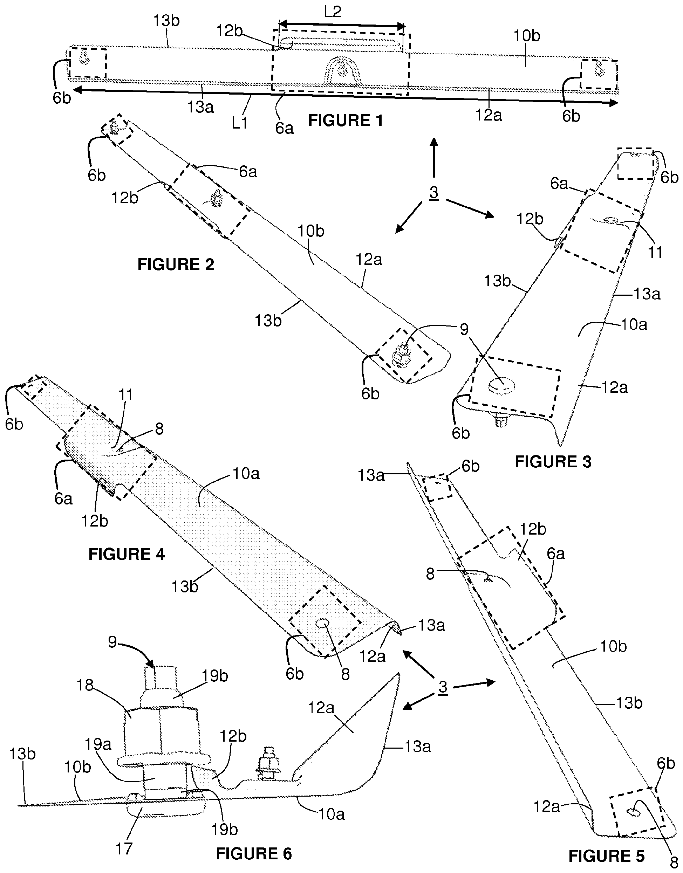

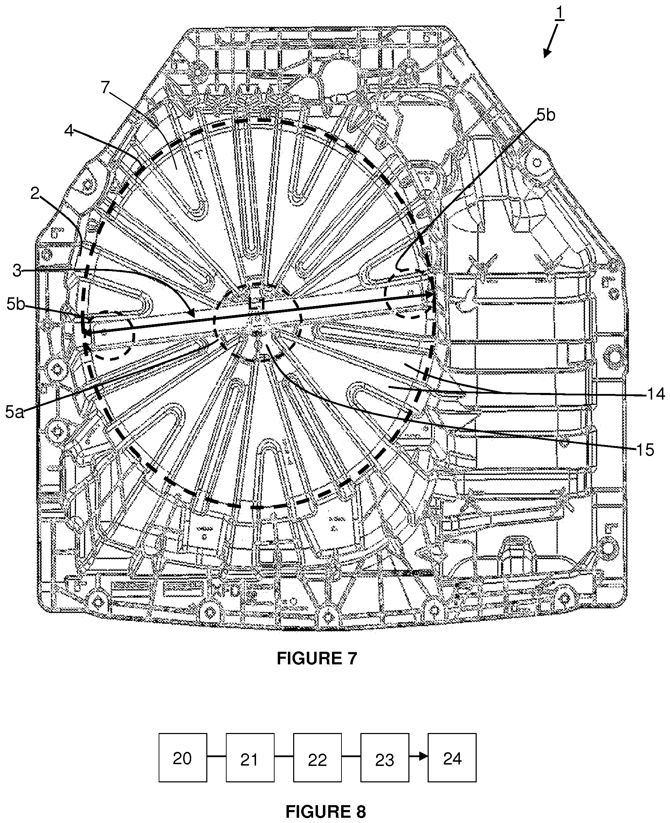

On a représenté sur les figures 1 à 7, un élément de renfort 3 agencé au niveau d'un plancher 1 de véhicule automobile. Ce plancher 1 visible sur la figure 7, peut être un plancher arrière de charge du véhicule. Ce plancher 1 peut être réalisé en matière composite constituée par une résine en matière plastique chargée de fibres. Ce plancher 1 est à la fois une pièce structurelle délimitant le fond de l'habitacle du véhicule automobile et également une pièce structurelle délimitant le fond du coffre de rangement située à l'arrière du véhicule et qui comprend un bac de roue de secours 2 à l'intérieur duquel est installé une roue de secours. Ce plancher 1 est une pièce structurelle qui est solidarisée à la caisse du véhicule automobile et qui participe à sa rigidité.

Ce plancher 1 comprend une face extérieure 7 sur laquelle est définie une zone de fixation 4 comprenant un fond du bac de roue de secours 2.

De manière alternative, la zone de fixation 4 peut également être définie sur une face intérieure du plancher 1 en particulier la partie de la face intérieure située au niveau du fond du bac de roue secours. Dans ces conditions, l'élément de renfort 3 est alors agencé dans la zone de fixation 4 selon le même principe qui est décrit par la suite pour la zone de fixation 4 définie sur la face extérieure 7 du plancher 1.

Cette zone de fixation 4 est une zone d'appui de la roue de secours supportant le poids de cette dernière. Cette zone de fixation 4 du plancher 1 comprend un emplacement de liaison de l'élément de renfort 3 au plancher 1.

Une telle zone de fixation 4 a une forme sensiblement circulaire comme le fond du bac de roue de secours. Cette zone de fixation 4 comprend une partie centrale 5a située au centre de cette zone 4 et à équidistance du périmètre qui délimite cette zone 4 sur la face extérieure 7 du plancher 1. Cette partie centrale 5a de la zone 4 comprend une cavité 15 ainsi qu'une ouverture agencée dans le fond de cette cavité 15. La zone 4 comprend également des parties périphériques 5b délimitant des régions de la zone de fixation 4 situées à proximité voire sur le périmètre de la zone 4 qui la délimite sur la face extérieure 7 du plancher 1. Les parties périphériques comprennent également des ouvertures. Ces ouvertures des parties centrale 5a et périphériques 5b sont ainsi définies dans la zone de fixation 4 afin de coopérer avec des éléments de fixation 9 de l'élément de renfort 3.

La zone 4 comprend aussi des reliefs 14 ou encore des nervures de renforcement du plancher 1. Ces reliefs 14 comprennent un réseau de saillies et de creux définis dans la face extérieure 7. Ces reliefs 14 s'étendent par exemple en étoile de la partie centrale 5a de la zone de fixation 4 vers la périphérie de cette zone de fixation 4 et en particulier vers les parties périphériques 5b.

Sur les figures 1 à 5, l'élément de renfort 3 a une forme globalement rectangulaire. En particulier, l'élément de renfort 3 a une section longitudinale présentant une forme d'un quadrilatère notamment celle d'un rectangle. Cet élément de renfort 3 est une pièce métallique pouvant être obtenu par un procédé d'emboutissage.

Cet élément de renfort 3 comporte des faces externe et interne 10a, 10b planes et parallèles entre elles. Cet élément de renfort 3 comprend également des premier et deuxième côtés 13a, 13b opposés reliant entre eux des côtés latéraux opposés de cet élément de renfort 3. L'élément de renfort 3 présente une longueur L1 qui est sensiblement similaire au diamètre de la zone de fixation 4.

Cet élément de renfort 3 comprend des régions centrale et périphériques 6a, 6b qui sont pourvues chacune d'une ouverture 8 reliant les faces externe et interne 10a, 10b de l'élément de renfort 3. La face externe 10a de la région centrale 6a de l'élément de renfort 3 comprend une cavité 11. Cette cavité 11 est définie dans la région centrale 6a de l'élément de renfort 3 afin que tout ou partie de la face interne 10b de cet élément 3 comprise dans cette région centrale 6a est agencée à proximité voire en contact avec tout ou partie de la face extérieure 7 du plancher 1 comprise dans la cavité 15 de la partie centrale 5a de la zone de fixation 4. Cette cavité 11 permet ainsi de participer à une fixation optimale de la région centrale 6a de l'élément de renfort 3 à la partie centrale 5a de la zone de fixation 4.

L'élément de renfort 3 comprend des éléments de fixation 9. Ces éléments de fixation 9 comprennent chacun par exemple une vis et un écrou 18 configurés pour coopérer ensemble pour assurer une liaison mécanique entre l'élément de renfort 3 et le plancher 1. Cette vis comprend une tête de vis 17 et un corps pourvu d'une zone filetée 19a et de zones non-filetées 19b. La tête de vis 17 de chaque vis est de préférence soudée, sertie ou collée à la face externe 10a de l'élément de renfort 3 et le corps traverse l'ouverture 8 définie dans l'élément de renfort 3. Ainsi, les têtes de vis 17 sont agencées dans les régions périphériques 6b et dans la région centrale 6a de l'élément de renfort 3 notamment dans la cavité 11. Ces ouvertures 8 sont susceptibles d'être alors traversées chacune par un de ces éléments de fixation 9 et en particulier pas le corps de celui-ci. Ces éléments de fixation 9 sont prévus pour relier mécaniquement l'élément de renfort 3 agencé sur la face extérieure 7 du plancher 1 et donc les régions centrale et périphériques 6a, 6b de cet élément de renfort 3 aux parties centrale et périphériques 5a, 5b de la zone de fixation 4.

L'élément de renfort 3 comprend aussi un premier bord de maintien 12a défini sur le premier côté 13a de l'élément de renfort 3. Ce premier bord 12a est courbé sur toute la longueur L1 dudit élément de renfort 3. Ce premier bord 12a est défini pour être agencé dans les creux et donc entre les saillies des reliefs 14 ainsi que dans la cavité 15 définis sur la face extérieure 7 du plancher 1 dans la zone de fixation 4.

L'élément de renfort 3 comporte également un deuxième bord de maintien 12b défini sur le deuxième côté 13b de l'élément de renfort 3. Ce bord 12b est courbé sur toute la longueur L2 de la région centrale 6a de l'élément de renfort 3. Ce deuxième bord 12b est défini pour être agencé dans la cavité 15 compris sur la face extérieure 7 du plancher 1 dans la zone de fixation 4.

Ces premier et deuxième bord de maintien 12a, 12b s'étendent en s'éloignant de la face intérieure 10b de l'élément de renfort 3. Ils contribuent à assurer un calage et/ou un maintien optimal de l'élément de renfort 3 sur la face extérieure 7 du plancher 1 dans laquelle est définie la zone de fixation 4. Dans cette configuration, la région centrale 6a de l'élément de renfort 3 a une section transversale présentant une forme en « U ». On notera que ces premier et deuxième bords 12a, 12b définissent avec la face externe 10a de l'élément de renfort 3 une forme aérodynamique de manière à générer un écoulement d'air sensiblement laminaire sur l'élément de renfort 3 lorsqu'il est monté dans la zone de fixation 4.

En référence à la figure 8, l'invention porte également sur un procédé de montage de l'élément de renfort 3 sur le plancher 1 du véhicule automobile.

Ce procédé comprend une étape d'agencement 20 de l'élément de renfort 3 dans la zone de fixation 4 du plancher 1. Cette étape comprend une sous-étape de positionnement 21 de la face interne 10b à proximité voire en contact avec la face extérieure 7 de la zone de fixation 4 du plancher 1 et ce, de manière à ce que les ouvertures 8 de l'élément de renfort 3 sont agencées de manière coaxiale avec les ouvertures définies dans les parties centrale et périphériques 5a, 5b de la zone de fixation 4. De plus, lors de cette sous-étape 21, les régions centrale et périphériques 6a, 6b de l'élément de renfort 3 sont agencées à proximité voire en contact avec respectivement les parties centrale et périphériques 5a, 5b de la zone de fixation 4. Durant la réalisation de cette sous-étape 21, le premier bord 12a est agencé dans les creux et donc entre les saillies des reliefs 14 ainsi que dans la cavité 15 définis sur cette face extérieure 7 du plancher 1 dans la zone de fixation 4. De même, le deuxième bord 12b est agencé dans la cavité 15 compris sur la face extérieure 7 du plancher 1 dans la zone de fixation 4.

Cette étape 20 comprend également une sous-étape d'insertion 22 des éléments de fixation 9 dans les ouvertures définies dans les parties centrale et périphériques 5a, 5b de la zone de fixation 4. Plus précisément, lors de cette sous-étape 22, les corps des vis traversent ces ouvertures de la zone de fixation 4.

Le procédé comprend ensuite une étape réalisation 23 d'une liaison mécanique entre l'élément de renfort 3 et la zone de fixation 4. Cette étape 23 prévoit une sous-étape fixation 24 lors de laquelle les écrous 18 des éléments de fixation 9 sont vissés sur les corps des vis en coopérant avec les zones filetées 19a de ces corps jusqu'à être en contact avec la face intérieure du plancher 1. Ainsi, lors de cette étape 23, les éléments de fixation 9 relient mécaniquement les régions centrale et périphériques 6a, 6b de l'élément de renfort 3 avec respectivement les parties centrale et périphériques 5a, 5b de la zone de fixation 4.

En outre, on notera que la fixation de la partie centrale 5a de la zone de fixation 4 à l'élément de renfort 3 permet notamment de rattraper la forme de la zone de fixation 4 du plancher 1 lorsque la roue de secours n'est pas agencée dans le bac de roue de secours 2, c'est-à-dire une forme sensiblement plane.

Un tel élément de renfort 3 permet de rigidifier la zone de fixation 4 et donc le fond du bac de la roue de secours 2. En rigidifiant ainsi cette zone de fixation 4, l'invention permet de fixé la résonance du bac de roue de secours à une fréquence déterminée permettant d'obtenir un fort amortissement de vibrations dans une certaine plage de fréquences notamment au niveau de la partie centrale 5a de cette zone de fixation 4. Ainsi, l'élément de renfort 3 permet de maitriser les fréquences de résonnance du plancher 1 et en particulier celles de la zone de fixation 4. Cet élément de renfort 3 agit comme en tendeur acoustique de la zone de fixation 4. Un tel élément de renfort 3 permet également d'éviter les phénomènes de résonance susceptibles de propager vers l'habitacle des vibrations du moteur ou de la caisse.

De plus cet élément de renfort 3 permet d'assurer une filtration des vibrations présentes au niveau du bac de roue de secours 2 et qui sont engendrées lors du roulage du véhicule afin d'améliorer le confort et les sensations de conduite, et diminuer la consommation du véhicule. Ces vibrations sont susceptibles d'être engendrées lors du roulage, y compris des vibrations parasites engendrées par le moteur et se propageant le long du châssis, de la carrosserie, de la boîte de vitesses et de la colonne de direction, et les signaux acoustiques engendrés lors du roulage du véhicule. L'élément de renfort 4 s'applique également au traitement des bruits aérodynamiques engendrés lors du roulage du véhicule à vitesse relativement élevée et qui ont un impact vibratoire sur le bac de roue de secours 2.

## Revendications

1. Plancher (1) d'un véhicule automobile notamment un plancher arrière, pourvu d'un bac de roue de secours (2) et d'un élément de renfort (3), le plancher (1) comportant une zone de fixation (4) comprenant un fond du bac de roue de secours (2) dans laquelle est agencé ledit élément de renfort (3) en étant relié mécaniquement à ladite zone de fixation (4) notamment à des parties centrale et périphériques (5a, 5b) définies dans ladite zone de fixation (4), **caractérisé en ce que** l'élément de renfort (3) comprend :
un bord de maintien (12a) défini sur un premier côté (13a) de l'élément de renfort (3), ledit bord (12a) étant courbé sur tout ou partie de la longueur (L1) dudit élément de renfort (3) ;
un deuxième bord de maintien (12b) défini sur un deuxième côté (13b) de l'élément de renfort (3), ledit bord (12b) étant courbé sur tout ou partie de la longueur (L2) d'une région centrale (6a) de l'élément de renfort (3), et des premier et deuxième côtés (13a, 13b) opposés l'un à l'autre.

2. Plancher (1) selon la revendication précédente, **caractérisé en ce que** la zone de fixation (4) est définie sur une face extérieure (7) ou une face intérieure du plancher (1).

3. Plancher (1) selon l'une quelconque des revendications précédentes, **caractérisé en ce que** l'élément de renfort (3) comprend :
des régions centrale et périphériques (6a, 6b) pourvues d'ouvertures (8) reliant des faces externe et interne (10a, 10b) de l'élément de renfort (3) ; et/ou
des ouvertures (8) susceptibles d'être traversées chacune par un élément de fixation (9) ; et/ou
des éléments de fixation (9) reliant mécaniquement ledit élément de renfort (3) aux parties centrale et périphériques (5a, 5b) de ladite zone de fixation(4).

4. Plancher (1) selon l'une quelconque des revendications précédentes, **caractérisé en ce qu'**une face externe (10a) d'une région centrale (6a) de l'élément de renfort (3) comprend une cavité (11) dans laquelle est agencé un élément de fixation (9).

5. Plancher (1) selon l'une quelconque des revendications précédentes, **caractérisé en ce que** l'élément de renfort (3) a une section longitudinale présentant une forme d'un quadrilatère notamment celle d'un rectangle.

6. Plancher (1) selon l'une quelconque des revendications précédentes, **caractérisé en ce qu'**une région centrale (6a) de l'élément de renfort (3) a une section transversale présentant une forme en « U ».

7. Plancher (1) selon l'une quelconque des revendications précédentes, **caractérisé en ce que** la zone de fixation (4) comprend :
des reliefs (14) de renforcement, et/ou
une partie centrale (5a) pourvue d'une cavité (15) définie dans ladite zone de fixation (4), et/ou
des parties centrale (5a) et périphériques (5b) de ladite zone de fixation (4) comprennent des ouvertures aptes à coopérer avec des éléments de fixation (9).

8. Procédé de montage d'un élément de renfort (3) sur un plancher (1) d'un véhicule automobile selon l'une quelconque des revendications précédentes, comprenant une étape (20) d'agencement de l'élément de renfort (3) dans une zone de fixation (4) du plancher (1) et une étape réalisation (23) d'une liaison mécanique entre l'élément de renfort (3) et la zone de fixation (4).

9. Véhicule automobile comprenant un plancher (1) selon l'une quelconque des revendications 1 à 9.

## Patentansprüche

1. Boden (1) eines Kraftfahrzeugs, insbesondere ein hinterer Boden, der mit einer Reserveradmulde (2) und mit einem Verstärkungselement (3) versehen ist, wobei der Boden (1) eine einen Boden der Reserveradmulde (2) enthaltende Befestigungszone (4) aufweist, in der das Verstärkungselement (3) angeordnet ist, indem es insbesondere in in der Befestigungszone (4) definierten zentralen und peripheren Teilen (5a, 5b) mechanisch mit der Befestigungszone (4) verbunden ist, **dadurch gekennzeichnet, dass** das Verstärkungselement (3) enthält:
einen auf einer ersten Seite (13a) des Verstärkungselements (3) definierten Halterand (12a), wobei der Rand (12a) über die ganze oder einen Teil der Länge (L1) des Verstärkungselements (3) gekrümmt ist;
einen auf einer zweiten Seite (13b) des Verstärkungselements (3) definierten zweiten Halterand (12b), wobei der Rand (12b) über die ganze oder einen Teil der Länge (L2) eines zentralen Bereichs (6a) des Verstärkungselements (3) gekrümmt ist, und einander gegenüberliegende erste und zweite Seiten (13a, 13b).

2. Boden (1) nach dem vorhergehenden Anspruch, **dadurch gekennzeichnet, dass** die Befestigungszone (4) auf einer Außenseite (7) oder einer Innenseite des Bodens (1) definiert ist.

3. Boden (1) nach einem der vorhergehenden Ansprüche, **dadurch gekennzeichnet, dass** das Verstärkungselement (3) enthält:
zentrale und periphere Bereiche (6a, 6b), die mit Öffnungen (8) versehen sind, die Außen- und Innenseiten (10a, 10b) des Verstärkungselements (3) verbinden; und/oder
Öffnungen (8), die je von einem Befestigungselement (9) durchquert werden können; und/oder
Befestigungselemente (9), die das Verstärkungselement (3) mechanisch mit den zentralen und peripheren Teilen (5a, 5b) der Befestigungszone (4) verbinden.

4. Boden (1) nach einem der vorhergehenden Ansprüche, **dadurch gekennzeichnet, dass** eine Außenseite (10a) eines zentralen Bereichs (6a) des Verstärkungselements (3) einen Hohlraum (11) enthält, in dem ein Befestigungselement (9) angeordnet ist.

5. Boden (1) nach einem der vorhergehenden Ansprüche, **dadurch gekennzeichnet, dass** das Verstärkungselement (3) einen Längsschnitt hat, der die Form eines Vierecks aufweist, insbesondere diejenige eines Rechtecks.

6. Boden (1) nach einem der vorhergehenden Ansprüche, **dadurch gekennzeichnet, dass** ein zentraler Bereich (6a) des Verstärkungselements (3) einen Querschnitt hat, der eine "U"-Form aufweist.

7. Boden (1) nach einem der vorhergehenden Ansprüche, **dadurch gekennzeichnet, dass** die Befestigungszone (4) enthält:
Verstärkungsreliefs (14), und/oder
einen in der Befestigungszone (4) definierten, mit einem Hohlraum (15) versehenen zentralen Teil (5a), und/oder
zentrale (5a) und periphere Teile (5b) der Befestigungszone (4) enthalten Öffnungen, die mit Befestigungselementen (9) zusammenwirken können.

8. Verfahren zur Montage eines Verstärkungselements (3) auf einen Boden (1) eines Kraftfahrzeugs nach einem der vorhergehenden Ansprüche, das einen Schritt (20) der Anordnung des Verstärkungselements (3) in einer Befestigungszone (4) des Bodens (1) und einen Schritt der Herstellung (23) einer mechanischen Verbindung zwischen dem Verstärkungselement (3) und der Befestigungszone (4) enthält.

9. Kraftfahrzeug, das einen Boden (1) nach einem der Ansprüche 1 bis 9 enthält.

## Claims

1. Motor vehicle floor pan (1), in particular a rear floor pan, provided with a spare wheel trough (2) and a reinforcing element (3), the floor pan (1) comprising a securing zone (4) comprising a bottom of the spare wheel trough (2) in which is arranged said reinforcing element (3), being mechanically connected to said securing zone (4), in particular at central and peripheral portions (5a, 5b) defined in said securing zone (4), **characterized in that** the reinforcing element (3) comprises:
a holding edge (12a) defined on a first side (13a) of the reinforcing element (3), said edge (12a) being curved over all or part of the length (L1) of said reinforcing element (3);
a second holding edge (12b) defined on a second side (13b) of the reinforcing element (3), said edge (12b) being curved over all or part of the length (L2) of a central region (6a) of the reinforcing element (3), and first and second sides (13a, 13b) that are opposite one another.

2. Floor pan (1) according to the preceding claim, **characterized in that** the securing zone (4) is defined on an outer face (7) or an inner face of the floor pan (1).

3. Floor pan (1) according to either of the preceding claims, **characterized in that** the reinforcing element (3) comprises:
central and peripheral regions (6a, 6b) provided with openings (8) that connect outer and inner faces (10a, 10b) of the reinforcing element (3); and/or
openings (8) through each of which a securing element (9) can pass; and/or
securing elements (9) mechanically connecting said reinforcing element (3) to the central and peripheral portions (5a, 5b) of said securing zone (4).

4. Floor pan (1) according to any one of the preceding claims, **characterized in that** an outer face (10a) of a central region (6a) of the reinforcing element (3) comprises a cavity (11) in which there is arranged a securing element (9).

5. Floor pan (1) according to any one of the preceding claims, **characterized in that** the reinforcing element (3) has a longitudinal section in the shape of a quadrilateral, in particular a rectangle.

6. Floor pan (1) according to any one of the preceding claims, **characterized in that** a central region (6a) of the reinforcing element (3) has a U-shaped cross section.

7. Floor pan (1) according to any one of the preceding claims, **characterized in that** the securing zone (4) comprises:
reinforcing reliefs (14), and/or a central portion (5a) provided with a cavity (15) defined in said securing zone (4), and/or
a central portion (5a) and peripheral portions (5b) of said securing zone (4) comprising openings that are able to engage with securing elements (9).

8. Method for mounting a reinforcing element (3) on a floor pan (1) of a motor vehicle according to any one of the preceding claims, comprising a step (20) of arranging the reinforcing element (3) in a securing zone (4) of the floor pan (1) and a step of establishing (23) a mechanical connection between the reinforcing element (3) and the securing zone (4).

9. Motor vehicle comprising a floor pan (1) according to any one of Claims 1 to 9.
